# EUROPEAN PATENT SPECIFICATION

(11) **EP 2 863 483 B1**
(45) Date of publication and mention of the grant of the patent: **28.08.2019**
(21) Application number: 14188985.7
(22) Date of filing: 15.10.2014
(51) Int. Cl.: H01R 13/447, H02G 3/14, H02G 3/12

(54) **Concealed module for electrical connections which can be recessed in a surface**
Geschütztes Modul zur elektrischen Verbindung, versenkt angeordnet in einer Oberfläche
Module de connexions électriques pouvant être dissimulé de part son intégration dans un réceptacle approprié

(30) Priority: 15.10.2013 IT MI20130355 U
(43) Date of publication of application: 22.04.2015
(73) Proprietor: A.S.A. Plastici Azienda Stampaggio Articoli Plastici S.R.L., 20090 Trezzano Sul Naviglio, MI (IT)
(72) Inventor: Crucitti, Rodolfo, 21100 VARESE (IT)
(74) Representative: Modiano, Micaela Nadia

(56) References cited:
- WO-A1-2008/154021
- US-A- 4 607 136
- US-A- 4 793 818
- Anonymous: "BPF - Rectangular Metal Cable Port & Desk Grommet - Buy Online - Banbury Plastic Fittings Ltd", , 21 October 2011 (2011-10-21), XP055417617, Retrieved from the Internet: URL:https://web.archive.org/web/2011102101 5543/www.bpfittings.co.uk//pc/80mm-Dia-Met al-Port-Rect-Profile-3971p40.htm [retrieved on 2017-10-20]

## Description

The present invention relates to a concealed module for electrical connections which can be recessed in a surface, particularly in a table or in a desk.

Currently, in all types of environments, the need is greatly felt to be able to have electrical service points for a variety of electrical and electronic devices, not just wall-mounted, but also distributed conveniently on a variety of storage and display surfaces or work surfaces, such as the surfaces of office furniture, or kitchen surfaces, or indeed the surfaces of tables, for example in offices, in meeting rooms, in conference rooms, or even in waiting rooms in hotels or other environments.

In particular, the aforementioned storage and display surfaces or work surfaces can be provided with electrical connections, such as electric power supply sockets, or ports for USB, RJ45, or HDMI, arranged on top of or underneath the surface.

The electrical connections arranged underneath the working surface suffer the drawback of being very inconvenient to reach, because they are hidden from the view of the user. Such electrical connections in fact force the user into uncomfortable contortions in order to be able to correctly carry out the connection of the electronic device.

Also, electrical connections arranged on top of the working surface have a major impact on the appearance of such working surface. Furthermore such electrical connections are not protected from the buildup of dust, or from the risk of being inadvertently infiltrated by beverages, food crumbs, or other external agents that would impair their operation.

The use has been proposed of hatches hinged on one side to cover the electrical connections, but these are inconvenient in application if used on tables or the like, in that they prevent easy access to the electrical connections from the side of the table toward which the hatch rotates open.

US 4 793 818 A discloses a safety guard for an electrical outlet, comprising a cover and a closure means which are structurally connected so that in order to expose socket openings of the electrical outlet, two movements are required on the part of a user: a first being in a perpendicular direction to the plane of the cover; the second being in a direction parallel to the plane of the cover. Springs are connected between the cover and the closure means serving to bias the closure means to the socket-covering position as the closure means are moved to expose the openings. In particular the safety guard comprises a cover to which is slidably mounted a pair of closure elements, in the manner to achieve the two spring-biased perpendicular movements required on the part of a user to provide a safeguard against accidental or intentional opening of the closure elements especially by children. The cover comprises a flat front wall with a central enlarged portion integral with the rear face of the front wall and having a centrally disposed hole to receive a screw adapted to affix the cover to a flat surface in which is received a pair of sockets and a plate having a hole with which the hole comes into registry. The front wall displays a pair of openings and on opposite sides of the central portion disposed in registry wit the sockets.

US 4 607 136 A discloses a childproof electrical wall outlet protective device, comprising a plate having openings therethrough which are in register with the plug receptacles of the outlet when the device is mounted thereon. The plate carries a pair of slidable panels which can be releasably locked in position to prevent a child from gaining access to the plug receptacles. Separating the openings of the plate is a center web portion having a bore therethrough adapted to receive a screw for securing the plate on the wall outlet.

WO 2008/154021 A1 discloses a concealed module according to the preamble of claim 1.

The aim of the present invention is to provide a concealed module for electrical connections which is capable of improving the known art in one or more of the above mentioned aspects.

Within this aim, an object of the invention is to provide a concealed module that has a minimal aesthetic impact and which allows access to the electrical connections from any side.

Another object of the invention is to provide a concealed module that enables the protection from dust, liquids and other external agents.

Another object of the present invention is to provide a concealed module that is convenient to use and is easily adaptable to the requirements of the user.

Another object of the invention is to provide a concealed module that is highly reliable, easy to implement and low cost.

In accordance with the invention, there is provided a concealed module for electrical connections as defined in the appended claims.

Further characteristics and advantages of the invention will become better apparent from the description of a preferred, but not exclusive, embodiment of the concealed module according to the invention, which is illustrated by way of non-limiting example in the accompanying drawings wherein:
Figure 1 is a perspective view of the concealed module according to the invention, in the covering position;
Figure 2 is a perspective view of the concealed module in Figure 1 according to the invention, in a first position for use, partially open;
Figure 3 is a perspective view of the concealed module in Figure 1 according to the invention, in a second position for use, partially open;
Figure 4 is a perspective view of the concealed module in Figure 1 according to the invention, in a third position for use, completely open;

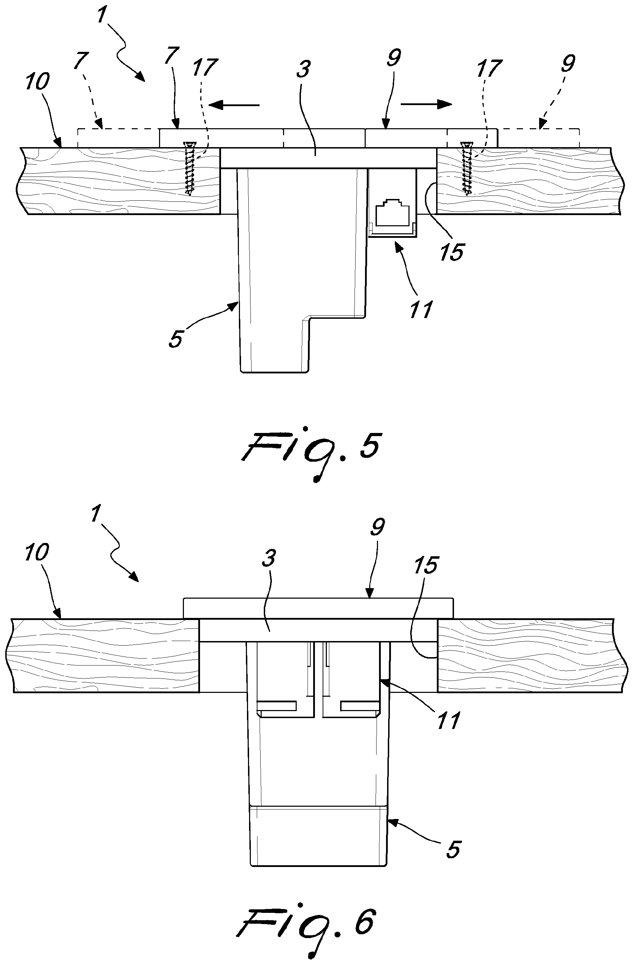

Figure 5 is a side view of the concealed module in Figure 1 according to the invention;
Figure 6 is a front elevation view of the concealed module in Figure 1 according to the invention.

With reference to the figures, the concealed module according to the invention, generally designated by the reference numeral 1, comprises a plate 3 for supporting electrical connections.

According to the invention, the module 1 comprises at least one first cover 7 that is slideable with respect to the plate 3, between a respective covering position, in which it is overlapping at least one first electrical connection 5, and a respective position for use, in which such first electrical connection 5 is accessible for use.

Advantageously, the module 1 further comprises a second cover 9 that is slideable with respect to the plate 3 between a respective covering position, in which it is overlapping at least one second electrical connection 11, and a respective position for use, in which the second electrical connection 11 is accessible for use.

The first cover 7 and the second cover 9 can be slideable toward or away from each other along substantially the same direction, so that, in the covering position of both of the covers, the set of the first cover 7 and of the second cover 9 is overlapping all the electrical connections 5 and 11 that are supported by the plate 3. In this manner the connections 5 and 11 are hidden from view, and are protected from degrading external agents such as dust, beverages, food crumbs, and the like.

In particular, in the covering position of both of the covers 7 and 9, the set of the slideable first cover 7 and of the slideable second cover 9 is overlapping the plate 3 that comprises the electrical connections 5 and 11.

The first cover 7 and the second cover 9 can be slideably coupled to the longitudinal outer edges 30 of the plate 3.

Advantageously, the first cover 7 and the second cover 9 can slide independently of each other, so that the sliding of either of the first cover 7 and the second cover 9 from the respective covering position to the respective position for use renders accessible, respectively, only the first electrical connection 5 or only the second electrical connection 11.

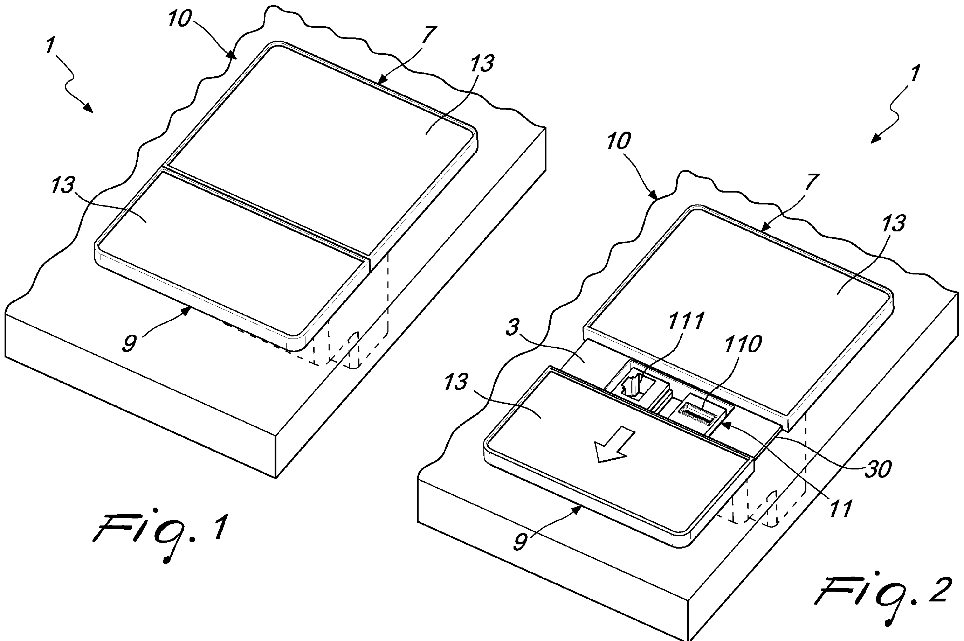

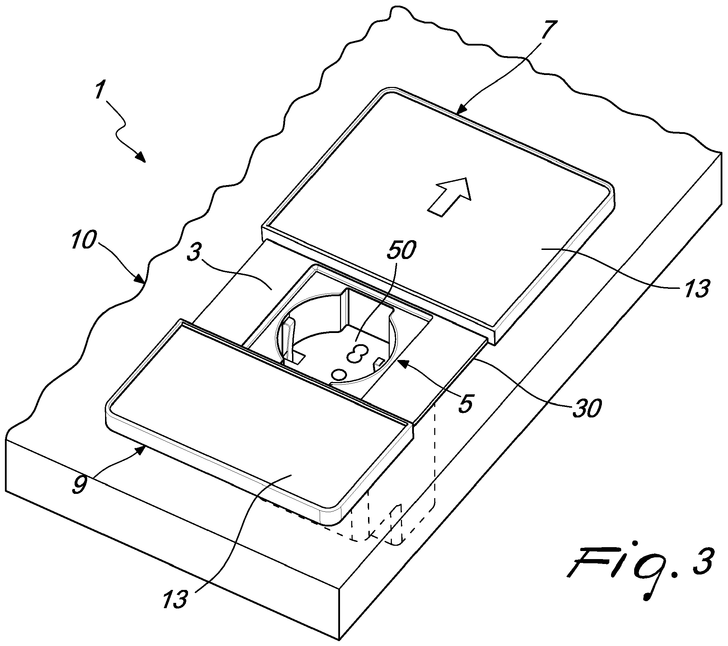

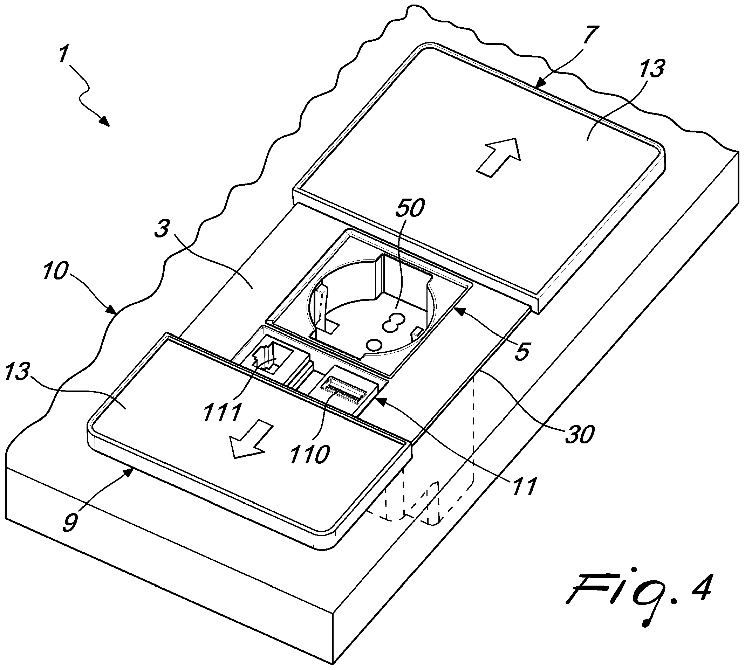

In this regard, Figure 2 shows the concealed module 1 in a first position for use, partially open, where only the second cover 9 is open, in the position for use, in order to allow access to the second electrical connection 11. Figure 3 shows a second position for use, partially open, in which only the first cover 7 is open, in the position for use, in order to allow access to the first connection 5 only. Figure 4 shows a third position for use, completely open, in which both the covers 7 and 9 are open, and both the electrical connections 5 and 11 are accessible.

The plate 3 can support a plurality of electrical connections 5 and 11 which are distributed substantially in a matrix, as in the case shown, of which one part, for example the mains socket 5 alone, can be individually removed from the plate 3 so as to define a passage opening through the plate 3. Such passage opening can advantageously be used in order to allow the passage of electrical cables, such as the electrical cables of further electrical or electronic devices, for example cables for monitors or computers placed on the surface in which the module according to the invention is inserted.

Furthermore, such individual removal of some of the matrix of electrical connections 5, 11 can be advantageously obtained by way of a snap-fitting element, or the like.

As illustrated in the accompanying figures, by way of example, the first electrical connection 5 comprises an electrical socket 50, such as a Schuko socket, while the second electrical connection 11 comprises one or more USB ports 110 and/or ports for modular connectors 111 such as RJ, Ethernet or telephony. The electrical connection 5 can further comprise any electrical socket of any nationality.

Advantageously furthermore, the first cover 7 and/or the second cover 9 comprises a depression 13 on the face that is opposite with respect to the face directed toward the plate 3, in which a removable panel is fixed. Such removable panel can be provided in various colors, with various finishes and in various materials, so as to give the concealed module 1, in particular when in the covering position of the electrical connections, as shown in Figure 1, a desired aesthetic finish.

The present invention further relates to a table, or desk, 10 that comprises at least one through hole 15, which is provided with the concealed module 1, fixed to the table 10 at such through hole 15.

Among the electrical connections there can also be an electronic board for delivering energy at a voltage of approximately 5 volts, necessary for recharging common electronic devices such as cellular phones, smartphones and tablet computers.

The mounting of the concealed module 1 involves providing a through hole 15 made in the table 10, advantageously with a diameter of approximately 80 millimeters. The plate 3, once arranged over the through hole 15 with the electrical connections 5 and 11 protruding downwardly, can be fixed to the upper surface of the table 10, from above, by way of two or more self-tapping screws 17, which remain covered by the presence of the covers 7 and 9, even in the position for use, and which are therefore accessible only by removing the covers 7 and 9 from the plate 3.

The electrified assembly can be fixed to the base, by way of a ferrule which is locked with self-tapping screws.

In practice it has been found that the device according to the invention fully achieves the set aim in that it makes it possible to hide, in an elegant manner according to the environment of use, the electrical connections with which a working surface or a storage and display surface can be provided.

Furthermore, the concealed module, according to the invention, makes it possible to protect the electrical connections from the unwanted accumulation of dust, from spilled beverages or other liquids, and from other foreign objects.

The concealed module according to the invention also has the advantage of allowing access to only the electrical connections that need to be used in a given moment, while leaving the unused electrical connections hidden and protected by the corresponding slideable cover.

The concealed module according to the invention furthermore has the advantage of being configurable according to the use that it is desired to make of it, it being easy to substitute and change the electrical connections.

The device, thus conceived, is susceptible of numerous modifications and variations, all of which are within the scope of the appended claims. Moreover, all the details may be substituted by other, technically equivalent elements.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A concealed module (1) for electrical connections adapted to be recessed in a surface, particularly in a table or in a desk, the module (1) comprising:
- a plate (3) supporting electrical connections, such as electric power supply sockets, or USB, RJ45, or HDMI ports, and adapted to be fixed to said surface, the module being **characterized in that** it further comprises:
- at least one first cover (7) that is slideable with respect to said plate (3) between a respective covering position, in which said first cover (7) is overlapping at least one first electrical connection (5), and a respective position for use, in which said at least one first electrical connection (5) is accessible for use,
- a second cover (9) that is slideable with respect to said plate (3) between a respective covering position, in which said second cover (9) is overlapping at least one second electrical connection (11), and a respective position for use, in which said at least one second electrical connection (11) is accessible for use;
said first cover (7) and said second cover (9) being slideable toward or away from each other along substantially the same direction, so that, in the covering position of both of the covers (7, 9), the slideable set of the first cover (7) and of the second cover (9) is overlapping all the electrical connections (5, 11) that are supported by the plate (3).

2. The module (1) according to claim 1, **characterized in that** in the covering position of both of the covers (7, 9), the slideable set of the first cover (7) and of the second cover (9) is overlapping said plate (3).

3. The module (1) according to claim 1 or 2, **characterized in that** said first cover (7) and said second cover (9) are slideably coupled to longitudinal outer edges (30) of said plate (3).

4. The module (1) according to one or more of the preceding claims, **characterized in that** said first cover (7) and said second cover (9) can slide independently of each other, so that the sliding of either of the first cover (7) and the second cover (9) from the respective covering position to the respective position for use renders accessible, respectively, only said at least one first electrical connection (5) or only said at least one second electrical connection (11).

5. The module (1) according to one or more of the preceding claims, **characterized in that** said plate (3) supports the plurality of electrical connections (5, 11) which are distributed substantially in a matrix, of which one part can be individually removed from said plate (3) so as to define a passage opening through said plate (3).

6. The module (1) according to claim 5, **characterized in that** said individual removal is achieved by way of a snap-fitting element.

7. The module (1) according to one or more of the preceding claims 5-6, **characterized in that** said at least one first electrical connection (5) comprises an electrical socket (50) and said at least one second electrical connection (11) comprises one or more USB ports (110) and/or ports for modular connectors (111) such as RJ, Ethernet or telephony.

8. The module (1) according to one or more of the preceding claims 1-4, **characterized in that** said first cover (7) and/or said second cover (9) comprises a depression (13) on the face that is opposite with respect to the face directed toward the plate (3), a removable panel being fixed in said depression (13).

9. A table (10) comprising at least one through hole (15), **characterized in that** it comprises the concealed module (1) for electrical connections according to one or more of the preceding claims, which is fixed to said table (10) at said through hole (15).

## Patentansprüche

1. Ein geschütztes Modul (1) für elektrische Verbindungen, ausgebildet, um in einer Oberfläche, insbesondere in einem Tisch oder in einem Schreibtisch, versenkt angeordnet zu werden, wobei das Modul (1) Folgendes umfasst:
- eine Platte (3), die elektrische Verbindungen, wie zum Beispiel Stromversorgungsbuchsen oder USB-, RJ45- oder HDMI-Anschlüsse, trägt und ausgebildet ist, um an der Oberfläche befestigt zu werden, wobei das Modul **dadurch gekennzeichnet ist, dass** es weiter Folgendes umfasst:
- mindestens eine erste Abdeckung (7), die im Verhältnis zu der Platte (3) verschiebbar ist zwischen einer entsprechenden Abdeckposition, in welcher die erste Abdeckung (7) mindestens einen ersten elektrischen Anschluss (5) überlagert, und einer entsprechenden Nutzungposition, in welcher der mindestens eine erste elektrische Anschluss (5) für den Gebrauch zugänglich ist,
- eine zweite Abdeckung (9), die im Verhältnis zu der Platte (3) verschiebbar ist zwischen einer entsprechenden Abdeckposition, in welcher die zweite Abdeckung (9) mindestens einen zweiten elektrischen Anschluss (11) überlagert, und einer entsprechenden Nutzungsposition, in welcher der mindestens eine zweite elektrische Anschluss (11) für den Gebrauch zugänglich ist;
wobei die erste Abdeckung (7) und die zweite Abdeckung (9) im Wesentlichen entlang derselben Richtung zueinander oder voneinander fort verschiebbar sind, so dass in der Abdeckposition beider Abdeckungen (7, 9) der verschiebbare Satz der ersten Abdeckung (7) und der zweiten Abdeckung (9) alle elektrischen Verbindungen (5, 11) überlagert, die von der Platte (3) getragen sind.

2. Das Modul (1) gemäß Anspruch 1, **dadurch gekennzeichnet, dass** in der Abdeckposition beider Abdeckungen (7, 9) der verschiebbare Satz der ersten Abdeckung (7) und der zweiten Abdeckung (9) die Platte (3) überlagert.

3. Das Modul (1) gemäß Anspruch 1 oder 2, **dadurch gekennzeichnet, dass** die erste Abdeckung (7) und die zweite Abdeckung (9) verschiebbar mit Längs-Außenkanten (30) der Platte (3) verbunden sind.

4. Das Modul (1) gemäß einem oder mehreren der obigen Ansprüche, **dadurch gekennzeichnet, dass** die erste Abdeckung (7) und die zweite Abdeckung (9) unabhängig voneinander gleiten können, so dass das Gleiten entweder der ersten Abdeckung (7) oder der zweiten Abdeckung (9) aus der entsprechenden Abdeckposition in die entsprechende Nutzungsposition nur den mindestens einen ersten elektrischen Anschluss (5) beziehungsweise nur den mindestens einen zweiten elektrischen Anschluss (11) zugänglich macht.

5. Das Modul (1) gemäß einem oder mehreren der obigen Ansprüche, **dadurch gekennzeichnet, dass** die Platte (3) die Vielzahl elektrischer Verbindungen (5, 11) trägt, die im Wesentlichen in einer Matrix verteilt sind, von der ein Teil individuell von der Platte (3) entfernt werden kann, um eine Durchgangsöffnung durch die Platte (3) zu bestimmen.

6. Das Modul (1) gemäß Anspruch 5, **dadurch gekennzeichnet, dass** das individuelle Entfernen durch ein Schnappverbindungselement durchgeführt wird.

7. Das Modul (1) gemäß einem oder mehreren der obigen Ansprüche 5-6, **dadurch gekennzeichnet, dass** der mindestens eine erste elektrische Anschluss (5) eine elektrische Buchse (50) umfasst und der mindestens eine zweite elektrische Anschluss (11) einen oder mehrere USB-Anschlüsse (110) und/oder Anschlüsse für modulare Steckverbinder (111), wie zum Beispiel RJ, Ethernet oder Telefonie, umfasst.

8. Das Modul (1) gemäß einem oder mehreren der obigen Ansprüche 1-4, **dadurch gekennzeichnet, dass** die erste Abdeckung (7) und/oder die zweite Abdeckung (9) eine Vertiefung (13) auf der Seite umfassen, die der der Platte (3) zugewandten Seite gegenüberliegt, wobei eine herausnehmbare Platte in der Vertiefung (13) befestigt ist.

9. Ein Tisch (10), der mindestens eine Durchgangsöffnung (15) umfasst, **dadurch gekennzeichnet, dass** er das geschützte Modul (1) für elektrische Verbindungen gemäß einem oder mehreren der obigen Ansprüche umfasst, welches an der Durchgangsöffnung (15) an dem Tisch (10) befestigt ist.

## Revendications

1. Module dissimulé (1) pour des connexions électriques adapté pour être encastré dans une surface, en particulier dans une table ou dans un bureau, le module (1) comportant :
- une plaque (3) supportant des connexions électriques, telles que des douilles d'alimentation électrique ou des ports USB, RJ45 ou HDMI, et adaptée pour être fixée à ladite surface, le module étant **caractérisé en ce qu'**il comporte en outre :
- au moins un premier cache (7) qui peut coulisser par rapport à ladite plaque (3) entre une position de recouvrement respective, dans laquelle ledit premier cache (7) recouvre au moins une première connexion électrique (5), et une position d'utilisation respective, dans laquelle ladite au moins une première connexion électrique (5) est accessible en vue d'une utilisation,
- un second cache (9) qui peut coulisser par rapport à ladite plaque (3) entre une position de recouvrement respective, dans laquelle ledit second cache (9) recouvre au moins une seconde connexion électrique (11), et une position d'utilisation respective, dans laquelle ladite au moins une seconde connexion électrique (11) est accessible en vue d'une utilisation,
ledit premier cache (7) et ledit second cache (9) pouvant coulisser l'un vers l'autre ou en s'éloignant l'un de l'autre pratiquement le long de la même direction, de sorte que, dans la position de recouvrement des deux caches (7, 9), l'ensemble coulissant du premier cache (7) et du second cache (9) recouvre toutes les connections électriques (5, 11) qui sont supportées par la plaque (3).

2. Module (1) selon la revendication 1, **caractérisé en ce que** dans la position de recouvrement des deux caches (7, 9), l'ensemble coulissant du premier cache (7) et du second cache (9) recouvre ladite plaque (3) .

3. Module (1) selon la revendication 1 ou 2, **caractérisé en ce que** ledit premier cache (7) et ledit second cache (9) sont couplés de manière coulissante à des bords extérieurs longitudinaux (30) de ladite plaque (3) .

4. Module (1) selon une ou plusieurs des revendications précédentes, **caractérisé en ce que** ledit premier cache (7) et ledit second cache (9) peuvent coulisser indépendamment l'un de l'autre, de sorte que le coulissement de l'un ou l'autre parmi le premier cache (7) et le second cache (9) depuis la position de recouvrement respective jusqu'à la position d'utilisation respective rend accessible, respectivement, ladite au moins une première connexion électrique (5) uniquement ou ladite au moins une seconde connexion électrique (11) uniquement.

5. Module (1) selon une ou plusieurs des revendications précédentes, **caractérisé en ce que** ladite plaque (3) supporte la pluralité de connexions électriques (5, 11) qui sont réparties sensiblement dans une matrice, dont au moins une partie peut être individuellement retirée de ladite plaque (3) de manière à définir un passage d'ouverture à travers ladite plaque (3).

6. Module (1) selon la revendication 5, **caractérisé en ce que** ledit retrait individuel est obtenu au moyen d'un élément d'encliquetage.

7. Module (1) selon une ou plusieurs des revendications 5 à 6 précédentes, **caractérisé en ce que** ladite au moins une première connexion électrique (5) comporte une douille électrique (50) et ladite au moins une seconde connexion électrique (11) comporte un ou plusieurs ports USB (110) et/ou des ports pour des connecteurs modulaires (111) tels que des connecteurs RJ, Ethernet ou de téléphonie.

8. Module (1) selon une ou plusieurs des revendications 1 à 4 précédentes, **caractérisé en ce que** ledit premier cache (7) et/ou ledit second cache (9) comporte un creux (13) sur la face qui est opposée par rapport à la face dirigée vers la plaque (3), un panneau amovible étant fixé dans ledit creux (13).

9. Table (10) comportant au moins un trou traversant (15), **caractérisée en ce qu'**elle comporte le module dissimulé (1) pour des connexions électriques selon une ou plusieurs des revendications précédentes, qui est fixé à ladite table (10) au niveau dudit trou traversant (15) .
